# EUROPEAN PATENT APPLICATION

(11) **EP 4 336 592 A1**
(43) Date of publication of application: **13.03.2024**
(21) Application number: 22937666.0
(22) Date of filing: 14.07.2022
(51) Int. Cl.: H01M 4/485

(54) **POSITIVE ELECTRODE ACTIVE MATERIAL AND PREPARATION METHOD THEREOF, SECONDARY BATTERY, BATTERY MODULE, BATTERY PACK AND ELECTRICAL APPARATUS**

(71) Applicant: Contemporary Amperex Technology Co., Limited, Ningde City, Fujian 352100 (CN)
(72) Inventor: LIANG, Zibin, Ningde, Fujian 352100 (CN); WANG, Yuhao, Ningde, Fujian 352100 (CN); LIN, Wenguang, Ningde, Fujian 352100 (CN); ZHANG, Xinxin, Ningde, Fujian 352100 (CN); HE, Jinhua, Ningde, Fujian 352100 (CN)
(74) Representative: Gong, Jinping
(86) International application number: PCT/CN2022/105646
(87) International publication number: WO 2024/011486

(57) **Abstract**

The present application provides a positive electrode active material and the preparation thereof, a secondary battery, a battery module, a battery pack, and electrical device. The positive electrode active material of the present application comprises a layered sodium composite oxide containing antimony having a chemical formula of Formula I, NaₓMnₐFe_{b}Ni_{c}Sb_{d}LₑO₂ (I), in which 0.7 < x ≤ 1, 0 < a, 0 ≤ b, 0.1 < c ≤ 0.3, 0 < d ≤ 0.1, 0 ≤ e, a+b+c+d+e=1, (b+c)/(a+d+e) ≤ 1, and L is one or more selected from Cu, Li, Ti, Zr, K, Nb, Mg, Ca, Mo, Zn, Cr, W, Bi, Sn, Ge, Al, Si, La, Ta, P, and B. The layered sodium composite oxide containing antimony of the present application, by being doped with specific metal Sb, has high stability to water.

## Description

### Technical Field

The present application relates to the field of battery technology, in particular to a positive electrode active material and the method for preparing the same, a secondary battery, a battery module, a battery pack, and electrical device.

### Backgrounds

In recent years, lithium-ion batteries has increasing application ranges, for example, they are applied in energy storage power systems such as hydropower, firepower, wind power, and solar power stations, and is applied in various fields such as electric tools, electric bicycles, electric motorcycles, electric vehicles, military equipment, and aerospace. With the scarcity of resources required for lithium-ion battery manufacturing and the increasing cost of raw materials such as Ni and Co, it is a research hotspot in the art of new energy to find low-cost alternatives for lithium-ion batteries.

Sodium ion batteries have advantages such as abundant reserves, low cost, system safety, low temperature, and high magnification, accordingly, they are excellent alternatives of lithium-ion batteries. Nevertheless, the existing positive electrode active materials of sodium ion batteries have poor water stability and low specific capacity, and accordingly, the development of sodium ion batteries are limited.

### Summary

The present application is proposed in view of the above tasks. The present application provides a positive electrode active material and the method for preparing the same, a secondary battery, a battery module, a battery pack, and electrical device, for solving the problems of poor water stability and low specific capacity of positive electrode active materials in existing sodium ion batteries.

In order to achieve the above objects, a first aspect of the present application provides positive electrode active material, comprising a layered sodium composite oxide containing antimonyhaving a chemical formula of Formula I,

NaₓMnₐFe_{b}Ni_{c}Sb_{d}LₑO₂ (I),

in which 0.7 < x ≤ 1, 0 < a, 0 ≤ b, 0.1 < c ≤ 0.3, 0 < d ≤ 0.1, 0 ≤ e, a+b+c+d+e=1, (b+c)/(a+d+e) <_ 1, and L is one or more selected from Cu, Li, Ti, Zr, K, Nb, Mg, Ca, Mo, Zn, Cr, W, Bi, Sn, Ge, Al, Si, La, Ta, P, and B.

The layered sodium composite oxide containing antimony of the present application, by being doped with specific metal Sb, have high stability to water. Moreover, it can effectively suppress the side reactions of the sodium composite oxide containing antimony during the electrochemical reaction, so that it has high cycling stability and stable electrochemical performance. Accordingly, the initial charging and discharging specific capacity of the sodium ion batteries can be improved.

In some embodiments of the first aspect of the present application, in Formula I, 0.3 ≤ a ≤ 0.4, 0.2 ≤ b ≤ 0.3, 0.15 ≤ c ≤ 0.2, 0.05 ≤ d ≤ 0.1, 0.05 ≤ e ≤ 0.1, a+b+c+d+e=1, and 0.4 ≤ (b+c)/(a+d+e) ≤ 1.

In those optional embodiments, the sodium composite oxide containing antimony that has the element ratios satisfying the above requirementscan improve the order degree of cation arrangements in the layered structure. As a result, the positive electrode active material has high structural stability and accordingly high stability to water. Moreover, according to those optional embodiments, sodium composite oxides containing antimony can comprise higher amounts of Fe and Ni, so that the sodium ion batteries having such antimony containing sodium composite oxide positive electrode active materials have higher initial charging and discharging specific capacity. Therefore, the sodium composite oxide containing antimony according to this embodiment better balances water stability, cyclic stability during electrochemical processes, and initial charging and discharging specific capacity.

In some embodiments of the first aspect of the present application, L is one or more selected from Cu, Li, Ti, Zr, Mg, Ca, Zn, Bi, Sn, Al, Si, La, Ta, P, and B, and optionally, L is one or more selected from Cu, Li, Mg, Zn, Al, Si, and B.

These specific optional additional doping elements can improve the stability of layered sodium composite oxides containing antimony to water, and can improve the cyclic stability of sodium composite oxides containing antimony during electrochemical processes. Moreover, those specific optional examples of L have good stability for the electrolyte and are also conducive to electrolyte solution infiltration.

In some embodiments of the first aspect of the present application, the sodium composite oxide containing antimony includes an O3 phase which has a layered crystal structure with a space group R3m.

In these optional embodiments, the O3 phase has significant advantages in both specific capacity and specific energy as compared to other phases. The sodium composite oxide containing antimony of the present application includes the O3 phase, which is a layered crystal structure with a space group R3m. The positive electrode active material with such crystal structure has good structural stability, and would have improved capacity performance and cycling performance.

In some embodiments of the first aspect of the present application, the sodium composite oxide containing antimony has an interlayer spacing of from 0.53 nm to 0.54 nm.

In those optional embodiments, when the interlayer spacing (d003) of the sodium composite oxide containing antimony is controlled within that range, the structure of the positive electrode active material is more stable, result in better cycling performance of the positive electrode active material. Meanwhile, sodium ions are more easily to intercalate and deintercalate between layers, which better improves the charge discharge specific capacity of the positive electrode active material. In addition, if the interlayer spacing of sodium composite oxides containing antimony is between 0.53 nm and 0.54 nm, it is advantageous to the conduction and diffusion of sodium ions between the layers, and can inhibit the exchange of hydrogen ions with sodium ions when layered sodium composite oxides containing antimony encounter water, making sodium composite oxides containing antimony more stable to water.

In some embodiments of the first aspect of the present application, the sodium composite oxide containing antimony has a X-ray diffraction spectrum that satisfies I₁/I₀ ≥ 0.2,

wherein, I₁ is the peak intensity of the X-ray diffraction peak on the 003 crystal surface of the O3 phase of the sodium composite oxide containing antimony after being immersed in deionized water for 24 hours, and I₀ is the peak intensity of the X-ray diffraction peak on the 003 crystal surface of the O3 phaseof the sodium composite oxide containing antimony before being immersed in deionized water.

In those optional embodiments, by doping with antimony, the interaction force between transition metals and oxygen in the O3 phase layered sodium composite oxide containing antimony is enhanced, so as to increase the stability to water. This is reflected by the parameter I₁/I₀, i.e. the larger the ratio of I₁/I₀ is, the less sensitive it is to water, indicating that the sodium composite oxide containing antimony has stronger stability to water.

In some embodiments of the first aspect of the present application, the volume average particle size Dv50 of the positive electrode active material is from 3 µm to 30 µm, and optionally from 5 µm to 15 µm.

In those optional embodiments, the volume average particle size Dv50 of the positive electrode active material falls within an appropriate range, it is advantageous for the positive electrode active material layer to achieve a higher compaction density, have an appropriate porosity to meet the electrolyte infiltration required for electrochemical reactions, and have a shorter migration path of active ions and electrons within the particles, so as to improve the energy density and cycling performance of the positive electrode active material layer.

In some embodiments of the first aspect of the present application, the specific surface area of the positive electrode active material is from 0.1 m²/g to 5 m²/g, and optionally from 0.3 m²/g to 3 m2/g.

In those optional embodiments, the positive electrode active material has an appropriate specific surface area, and thus could result in reduced liquid absorption phenomenon during the preparation process of the positive electrode slurry and improved solid content and particle dispersion uniformity in the positive electrode slurry, so as to improve the particle dispersion uniformity and compaction density in the film layer containing the positive electrode active material, and further to increase the specific capacity and energy density of the sodium ion battery, and improve the cycling performance of the sodium ion battery.

In some embodiments of the first aspect of the present application, the tap density of the positive electrode active material is from 1 g/cm³ to 3 g/cm³, and optionally from 1. 5 g/cm³ to 2.5 g/cm³.

In these optional embodiments, the positive electrode active material having the appropriate tap density, it is beneficial for the positive electrode active material to have a higher compaction density, thereby enabling the sodium ion battery to have higher capacity performance and energy density.

In some embodiments of the first aspect of the present application, the powder compaction density of the positive electrode active material under a pressure of 8 tons is from 3 g/cm³ to 5 g/cm³, and optionally from 3.5 g/cm³ to 4.5 g/cm³.

In those optional embodiments, the positive electrode active material has a high compaction density, it is beneficial for the sodium ion battery to have high capacity performance and energy density. Within that range, the higher the compaction density of the positive electrode active material is, the higher the capacity performance and energy density of the sodium ion battery will be.

The second aspect of the application also provides method for preparing a positive electrode active material, comprising
providing a raw materialthat has elements at the proportion satisfying the chemical formula of Formula I according to any embodiment of the first aspect of the present application;
calcining the raw material, to obtain a positive electrode active material,
wherein, the positive electrode active material comprises a layered sodium composite oxide containing antimony, wherein the sodium composite oxide containing antimony has a chemical formula of Formula I,

   NaₓMnₐFe_{b}Ni_{c}Sb_{d}LₑO₂ (I),
in which 0.7 < x ≤ 1, 0 < a, 0 ≤ b, 0.1 < c ≤ 0.3, 0 < d < 0.1, 0 ≤ e, a+b+c+d+e=1, (b+c)/(a+d+e) <_ 1, and L is one or more selected from Cu, Li, Ti, Zr, K, Nb, Mg, Ca, Mo, Zn, Cr, W, Bi, Sn, Ge, Al, Si, La, Ta, P, and B.

According to the embodiment of the method for preparing the positive electrode active material of the present application, firstly, providing the raw material, and then calcining the raw material to obtain the positive electrode active material. The above method for preparing the positive electrode active material is simple and has high manufacturability.

In some embodiments of the second aspect of the present application, providing a raw material comprises stirring a sodium source, manganese source, iron source, nickel source, antimony source, and L source homogeneously, to obtain the raw material, wherein the L source is selected one or more sources from Cu source, Li source, Ti source, Zr source, K source, Nb source, Mg source, Ca source, Mo source, Zn source, Cr source, W source, Bi source, Sn source, Ge source, Al source, Si source, La source, Ta source, P source, and B source.

In some embodiments of the second aspect of the present application, the sodium source is one or more selected from Na₂CO₃, NaHCO₃, NaOH, and Na₂O₂.

In some embodiments of the second aspect of the present application, the iron source is one or more selected from Fe₂O₃, Fe₃O₄, and FeO.

In some embodiments of the second aspect of the present application, the manganese source is one or more selected from Mn₂O₃, Mn₃O₄, MnO, and MnO₂.

In some embodiments of the second aspect of the present application, the nickel source is selected from NiO or Ni(OH)₂.

In some embodiments of the second aspect of the present application, the antimony source is one or more selected from elemental antimony, antimony-containing oxides, or antimony salts.

In some embodiments of the second aspect of the present application, providing a raw material comprises mixing iron source, manganese source, nickel source, and L source with water, to obtain a mixture solution, wherein the L source is one or more selected from Cu source, Li source, Ti source, Zr source, K source, Nb source, Mg source, Ca source, Mo source, Zn source, Cr source, W source, Bi source, Sn source, Ge source, Al source, Si source, La source, Ta source, P source, and B source; mixing the mixture solution with a precipitant, to form a precipitate; stirring the precipitate, sodium source, and antimony source homogeneously, to obtain the raw material.

In some embodiments of the second aspect of the present application, the sodium source is one or more selected from Na₂CO₃, NaHCO₃, NaOH, and Na₂O₂.

In some embodiments of the second aspect of the present application, the iron source is one or more selected from iron-containing chlorides, iron-containing sulfates, and iron-containing nitrates.

In some embodiments of the second aspect of the present application, the manganese source is one or more selected from manganese-containing chlorides, manganese-containing sulfates, and manganese-containing nitrates.

In some embodiments of the second aspect of the present application, the nickel source is one or more selected from nickel-containing chlorides, nickel-containing sulfates, and nickel-containing nitrates.

In some embodiments of the second aspect of the present application, the antimony source is one or more selected from elemental antimony, antimony-containing oxides, or antimony salts.

In some embodiments of the second aspect of the present application, the precipitant is one or more selected from hydroxides, carbonates, and oxalates.

The third aspect of the application also provides a secondary battery, comprising the positive electrode active material according to the first aspect of the present application or the the positive electrode active material prepared by the method for preparing the positive electrode active material of the second aspect of the present application.

The fourth aspect of the present application provides a battery module, including a secondary battery of the third aspect of the present application.

The fifth aspect of the present application provides a battery pack, including the battery module of the fourth aspect of the present application.

The sixth aspect of the present application provides electrical device, at least one selected from the secondary battery of the third aspect of the present application, the battery module of the fourth aspect of the present application, or a battery pack selected of the fifth aspect of the present application.

### Brief description of the drawings

In order to provide a clearer explanation of the embodiments of the present application, a brief description will be given to the accompanied drawings mentioned in the embodiments of the present application. It is evident that the accompanied drawings described below are only some exemplary embodiments of the present application. For those skilled in the art, other accompanied drawings can be obtained based on the drawings without any inventive effort.
Figure 1 is the X-ray diffraction spectrum of the positive electrode active material of an embodiment of the present application before and after being immersed into deionized water for 24 hours.
Figure 2 is the X-ray diffraction spectrum of the positive electrode active material in another embodiment of the present application before and after being immersed into deionized water for 24 hours;
Figure 3 is the X-ray diffraction spectrum of a positive electrode active material without antimony before and after being immersed into deionized water for 24 hours;
Figure 4 illustrates a schematic diagram of a secondary battery according to the first embodiment of the present application.
Figure 5 illustrates an exploded view of the secondary battery according to the first embodiment of the present application, as shown in Figure 4.
Figure 6 is a schematic diagram of a battery module according to an embodiment of the present application.
Figure 7 is a schematic diagram of a battery pack according to an embodiment of the present application.
Figure 8 is an exploded view of the battery pack according to an embodiment of the present application, as shown in Figure 7.
Figure 9 is a schematic diagram of an electrical device using a secondary battery as a power source according to an embodiment of the present application.

### References in the drawings:

1 battery pack; 2. upper box; 3 lower box; 4 battery module; 5 secondary battery; 51 shell; 52 electrode assembly; 53 cover plate.

### Detailed Description

Hereinbelow, with reference to the accompanied drawings, the embodiments of the adhesive, negative electrode plate, secondary battery, battery module, battery pack, and electrical device of the present application are described in detail. However, unimportant detailed descriptions will be omitted. For example, detailed descriptions of matters which are already well known, and cases of repetitive descriptions of practically the same structure will be omitted. This is to avoid the following description becoming unnecessarily lengthy and to facilitate understanding by those skilled in the art. Furthermore, the accompanied drawings and the following description are provided for the purpose of fully understanding the present application by those skilled in the art, and are not intended to limit the subject matter recorded in the claims.

The "range" disclosed in the present application is limited by a lower limit and an upper limit. The given range is limited by selecting a lower limit and an upper limit, and the selected lower limit and upper limit consist the boundary of the specific range. The range limited in this way can include or exclude the end values, and can be combined in any way, that is, any lower limit can be combined with any upper limit to form a new range. For example, if a range of 60-120 and 80-110 are listed for specific parameters, it is also expected to be understood as a range of 60-110 and 80-120. In addition, if the minimum values 1 and 2 are listed, and if the maximum values 3, 4, and 5 are listed, the following ranges can all be expected: 1-3, 1-4, 1-5, 2-3, 2-4, and 2-5. According to the present application, unless otherwise specified, the numerical range "a-b" represents an abbreviated representation of any combination of real numbers between a and b, where a and b are both real numbers. For example, the numerical range "0-5" indicates that all real numbers falling in the range of "0-5" have been listed herein, and "0-5" is only repent those numerical combinations in short. In addition, when expressing a parameter as an integer ≥ 2, the parameter is, for example, as integers 2, 3, 4, 5, 6, 7, 8, 9, 10, 11, 12, etc. are disclosed.

Unless otherwise specified, all embodiments and optional embodiments of the present application can be combined to form new embodiments.

Unless otherwise specified, all technical features and optional technical features of the present application can be combined to form a new embodiment.

Unless otherwise specified, all steps of the present application can be carried out in sequence or randomly, preferably in sequence. For example, the method comprises steps (a) and (b), indicating that the method may include steps (a) and (b) that are sequentially performed, as well as steps (b) and (a) that are sequentially performed. For example, the mentioned method may also include step (c), indicating that step (c) can be added to the method in any order. For example, the method may include steps (a), (b), and (c), steps (a), (c), and (b), and may also include steps (c), (a), and (b).

Unless otherwise specified, the terms "include(s)/including" and "comprise(s)/comprising" mentioned of the present application indicate open or closed. For example, the words "include(s)/including" and "comprise(s)/comprising" can indicate that other components that are not listed can also be included or comprised, or only listed components can be included or comprised.

Unless otherwise specified, of the present application, the term "or" is inclusive. For example, the phrase "A or B" means "A, B, or both A and B". More specifically, any of the following conditions satisfy the condition "A or B": A is true (or exists) and B is false (or does not exist); A is false (or non-existent) and B is true (or exists); Or both A and B are true (or exists).

### Positive electrode active material

The first aspect of the present application provides a positive electrode active material, comprsing a layered sodium composite oxide containing antimony. The sodium composite oxide containing antimony has a chemical formula of Formula I,

NaₓMnₐFe_{b}Ni_{c}Sb_{d}LₑO₂ (I),

in which 0.7 < x ≤ 1, 0 < a, 0 ≤ b, 0.1 < c ≤ 0.3, 0 < d ≤ 0.1, 0 ≤ e, a+b+c+d+e=1, (b+c)/(a+d+e) <_ 1, and L is one or more selected from Cu, Li, Ti, Zr, K, Nb, Mg, Ca, Mo, Zn, Cr, W, Bi, Sn, Ge, Al, Si, La, Ta, P, and B.

The sodium composite oxide containing antimony provided of the present application has a specific chemical composition, and the sodium composite oxide containing antimony has the chemical formula shown in Formula I, NaₓMnₐFe_{b}Ni_{c}Sb_{d}LₑO₂ (I). In the positive electrode active material of the present application, doping with specific metal Sb can make the layered sodium composite oxide containing antimony highly stable to water, and in electrochemical reactions, it can effectively suppress the byproducts formed by unexpected chemical reactions on the surface of the sodium composite oxide particles containing antimony, resulting in high cyclic stability of the sodium composite oxide containing antimony, And can stably exert its electrochemical performance.

It is not intended to be limited by any theory, hereinbleow, the reasons why the structural stability of the sodium composite oxide containing antimony of the embodiments of the present application will be explained, in order to better illustrate the purpose and intended effects of the present application.

The inventors, through research, have found that when layered sodium composite oxides containing Ni and/or Fe (without Sb) contact with water, sodium ions in the layered sodium composite oxide exchange with hydrogen ions, which are intercalated between the layered structures, causing the layered structures to collapse and damage. Additionally, Ni and/or Fe react with water to generate NiO and/or FemOn (such as FeO, Fe₂O₃, Fe₃O₄), which affects the stability of the layered structures. Moreover, during the electrochemical process, layered sodium composite oxides will react with the electrolyte, generating by-products such as NiO and/or FeₘOₙ on the surface of the particles of layered sodium composite oxides, greatly reducing the electrochemical performance of layered sodium composite oxides. The inventor also suppressed the occurrence of by-products such as NiO and/or Fe₃O₄ by reducing the content of Ni and/or Fe in layered sodium composite oxides. However, as the content of Ni and/or Fe decreased, the specific capacity of the first charge and discharge of sodium ion batteries formed by layered sodium composite oxides as positive electrode active materials also decreased.

Surprisingly, the inventors have found that the sodium composite oxide containing antimony doped with specific element Sb of the present application can significantly improve the stability of the positive electrode active material containing Ni and/or Fe to water without reducing the initial charge discharge specific capacity. Without wishing to be bound by any theory, the reason why doping a certain amount of Sb can achieve the above effect is as follows. Specifically, when layered sodium composite oxides containing Ni and/or Fe without Sb doping contact with water, the sodium ions between the layers will exchange with hydrogen ions, and hydrogen ions will be embedded between the layered structures. Due to the significantly smaller atomic radius of hydrogen ions than that of sodium ions, the interlayer spacing will be reduced, and even the layered structures will collapse. When a certain amount of Sb is doped in such layered sodium composite oxides, some Ni and/or Fe in the layered structure crystal are replaced by Sb. On the one hand, due to the strong interaction between Sb and Na, and even forming an alloy, when the layered sodium composite oxide doped with Sb comes into contact with water, the degree of exchange between sodium ions and hydrogen ions between the layers decreases. On the other hand, due to the higher chemical stability of Sb, it is not easy to react with water to generate oxides and damage the layered crystal structure. In addition, during electrochemical reactions such as battery charging and discharging, layered sodium composite oxides doped with Sb can effectively suppress side reactions with the electrolyte solution, resulting in high cycling stability of sodium composite oxides containing antimony and stable electrochemical performance.

In some embodiments of the present application, the doping of Mn, Sb, and L in the sodium composite oxide containing antimony, wherein L is one or more selected from Cu, Li, Ti, Zr, K, Nb, Mg, Ca, Mo, Zn, Cr, W, Bi, Sn, Ge, Al, Si, La, Ta, P, and B, can further enhance the stability of the layered sodium composite oxide containing antimony to water and the cyclic stability of the sodium composite oxide containing antimony in the electrochemical process.

In some embodiments of the present application, in Formula I, wherein 0.7 < x ≤ 1, x may be 0.71, 0.72, 0.73, 0.74, 0.75, 0.76, 0.77, 0.78, 0.79, 0.8, 0.81, 0.82, 0.83, 0.84, 0.85, 0.86, 0.87, 0.88, 0.89, 0.9, 0.91, 0.92, 0.93, 0.94, 0.95, 0.96, 0.97, 0.98, 0.99 or 1, or falls within any range formed from any two endpoints as mentioned above.

In some embodiments of the present application, by setting 0 < d ≤ 0.1 in Formula I, the content of doped Sb is controlled to be relatively low, and excessive Sb doping is further avoided, resulting in a reduced initial charging and discharging specific capacity of the sodium ion battery containing the antimony containing sodium composite oxide of the present application.

In some embodiments of the present application, in Formula I, (b+c)/(a+d+e) ≤ 1, by virture of this, the appropriate content of doped Fe and/or Ni is controlled, so as to prevent excessive Fe and/or Ni from reacting more easily with water, and prevent Fe and/or Ni in the sodium composite oxide containing antimony from reacting with the electrolyte during the electrochemical process, thereby effectively suppressing the occurrence of inhibitory side reactions. In addition, in Formula I (b+c)/(a+d+e) ≤ 1, it indicates that the total doping content of Sb, Mn, and L is greater than or equal to the total doping content of Fe and Ni, thereby ensuring the structural stability of sodium composite oxides containing antimony.

According to the present application, doping with the specific metal Sb can make layered antimony containing sodium composite oxides have high stability to water. Sb and O have strong covalent interactions, which can at least improve the local structural stability of layered antimony containing sodium composite oxides, suppress side reactions such as proton exchange when layered antimony containing sodium composite oxides come into contact with water molecules, and increase their water stability. Moreover, during the electrochemical reaction process, it can effectively suppress the side reactions of sodium composite oxides containing antimony, resulting in high cycling stability and stable electrochemical performance of sodium composite oxides containing antimony.

In some embodiments, in Formula I, 0.3 ≤ a ≤ 0.4, 0.2 ≤ b ≤ 0.3, 0.15 ≤ c ≤ 0.2, 0.05 ≤ d ≤ 0.1, 0.05 ≤ e ≤ 0.1, a+b+c+d+e=1, and 0.4 ≤ (b+c)/(a+d+e) ≤ 1.

Optionally, a is 0.4, b is 0.2, c is 0.2, d is 0.1, and e is 0.1.

In those optional embodiments, the proportion of each element in the sodium composite oxide containing antimony thatsatisfies the above requirements can improve the ordered arrangement of cations in the layered structure, ensuring that the positive electrode active material has high structural stability, thereby making the positive electrode active material more stable to water. On the other hand, according to these optional embodiments, sodium composite oxides containing antimony can contain higher amounts of Fe and Ni, enabling sodium ion batteries using such positive electrode active materials to have higher initial charging and discharging specific capacity. Therefore, the sodium composite oxide containing antimony according to this embodiment better balances water stability, cyclic stability during electrochemical processes, and initial charging and discharging specific capacity.

In some embodiments, L is one or more selected from Cu, Li, Ti, Zr, Mg, Ca, Zn, Bi, Sn, Al, Si, La, Ta, P, and B.

Optionally, L is one or more selected from Cu, Li, Mg, Zn, Al, Si, and B.

Those specific optional additional doping elements can enhance the stability of layered sodium composite oxides containing antimony towards water, as well as the cyclic stability of sodium composite oxides containing antimony during electrochemical processes. Moreover, these specific optional L examples have good stability for the electrolyte and are also conducive to electrolyte infiltration.

The layered sodium composite oxide containing antimony of the present application is used as a positive electrode active material. According to the stable phase structure of the layered sodium composite oxide containing antimony, it can be classified into P2 phase and O3 phase layered metal oxides

In some embodiments, the sodium composite oxides containing antimony include the O3 phase, which is a layered crystal structure with space group R3m.

In these optional embodiments, O3 has significant advantages in both specific capacity and specific energy compared to other phases. The sodium composite oxide containing antimony of the present application includes O3 phase, which is a layered crystal structure with a space group R3m. The positive electrode active material with this crystal structure has good structural stability, which is conducive to improving the capacity performance and cycling performance of the positive electrode active material.

In some embodiments, the interlayer spacing of sodium composite oxides containing antimony is from 0.53 nm to 0.54 nm.

Optionally, the interlayer spacing of sodium composite oxides containing antimony is from 0.534 nm to 0.548 nm.

In these optional embodiments, when the interlayer spacing (d003) of the sodium composite oxide containing antimony is controlled within the above ranges, the structure of the positive electrode active material is more stable, manifested as better cycling performance of the positive electrode active material. At the same time, sodium ions are more easily intercalated between layers, which better improves the charge discharge specific capacity of the positive electrode active material. In addition, the interlayer spacing of sodium composite oxides containing antimony between 0.53 nm and 0.54 nm is conducive to the conduction and diffusion of sodium ions between the layers and can also suppress the exchange reaction between hydrogen ions and sodium ions when the layered sodium composite oxides containing antimony encounter water, thus making the sodium composite oxides containing antimony more stable to water.

In some embodiments, the X-ray diffraction spectrum of sodium composite oxide containing antimony satisfies I₁/I₀ ≥ 0.2,

wherein, I₁ is the peak intensity of the X-ray diffraction peak on the 003crystal surface of the O3 phase of the sodium composite oxide containing antimony after being immersed in deionized water for 24 hours, and I₀ is the peak intensity of the X-ray diffraction peak on the 003 crystal surface of the O3 phase of the sodium composite oxide containing antimony before being immersed in deionized water.

In some embodiments of the present application, the X-ray diffraction spectrum of the sodium composite oxide containing antimony satisfies 0.2 ≤ I₁/I₀ < 1, and I₁/I₀ reflects the sensitivity of the sodium composite oxide containing antimony in the O3 phase layer to water.

Optionally, the X-ray diffraction spectrum of sodium composite oxides containing antimony satisfies 0.35 ≤ I₁/I₀ < 1.

Optionally, the X-ray diffraction spectrum of sodium composite oxides containing antimony satisfies 0.6 ≤ I₁/I₀ < 0.9.

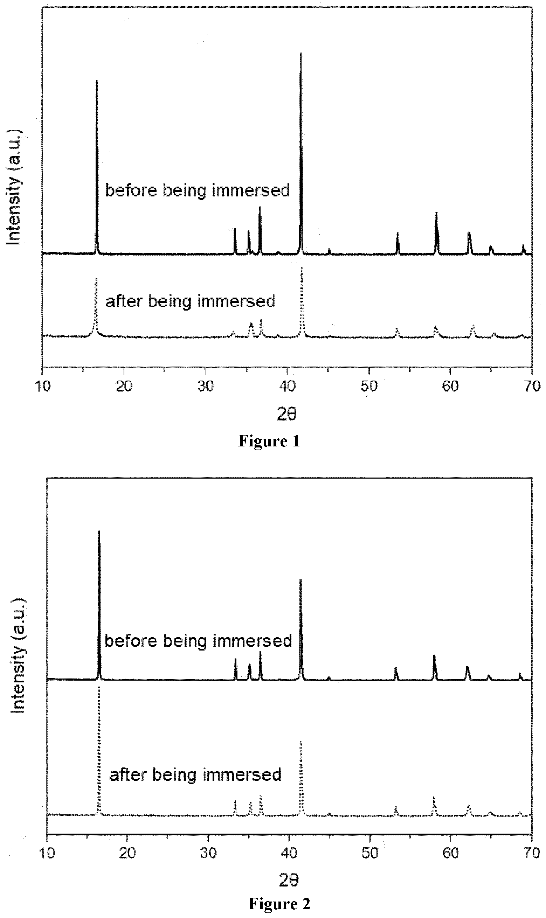

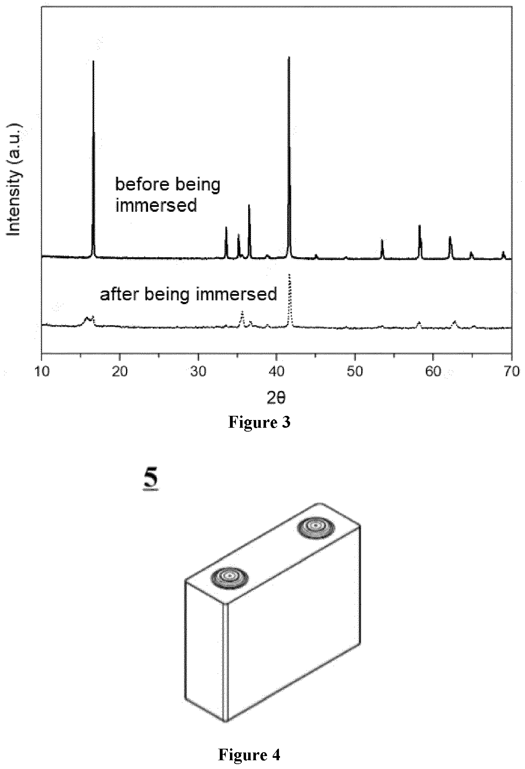

Figure 1 shows the X-ray diffraction spectrum of the positive electrode active material of the first embodiment of the present application before and after being immersed into deionized water for 24 hours; Figure 2 shows the X-ray diffraction spectrum of the positive electrode active material in another embodiment of the present application before and after being immersed into deionized water for 24 hours; and Figure 3 shows the X-ray diffraction spectrum of a positive electrode active material without antimony before and after being immersed into deionized water for 24 hours.

As an example, Figure 1 shows the X-ray diffraction spectrum of sodium composite oxide NaNi_{0.2}Fe_{0.29}Mn_{0.4}Cu_{0.1}Sb_{0.01}O₂ containing antimony before and after being immersed into deionized water for 24 hours. The solid line in Figure 1 represents the X-ray diffraction pattern of the O3 phase of the sodium composite oxide containing antimony that was not immersed in deionized water (before immersed), while the dashed line represents the X-ray diffraction pattern of the sodium composite oxide containing antimony after being immersed in deionized water for 24 hours (after immersed). From Figure 1, it can be seen that I₁/I₀ is 0.35, and the positions of each characteristic peak in the two X-ray diffraction patterns are basically the same, indicating that the crystal structure of the sodium composite oxide containing antimony, NaNi_{0.2}Fe_{0.29}Mn_{0.4}Cu_{0.1}Sb_{0.01}O₂, does not undergo substantial changes after being immersed in deionized water for 24 hours. Therefore, the sodium composite oxide containing antimony is not sensitive to water, which can be understood as its strong stability to water.

As another example, Figure 2 shows the X-ray diffraction spectrum of sodium composite oxide NaNi_{0.2}Fe_{0.2}Mn_{0.4}Cu_{0.1}Sb_{0.1}O₂ containing antimony before and after being immersed into deionized water for 24 hours. The solid line in Figure 2 shows the X-ray diffraction pattern of the O3 phase of the sodium composite oxide containing antimony that was not immersed in deionized water (before immersion), while the dashed line shows the X-ray diffraction pattern of the sodium composite oxide containing antimony after being immersed in deionized water for 24 hours (after immersion). From Figure 2, it can be seen that I₁/I₀ is 0.86, and the positions of each characteristic peak in the two X-ray diffraction patterns are basically the same, indicating that the crystal structure of the sodium composite oxide containing antimony, NaNi_{0.2}Fe_{0.2}Mn_{0.4}Cu_{0.1}Sb_{0.1}O₂, does not undergo any substantial changes after being immersed in deionized water for 24 hours. Therefore, the sodium composite oxide containing antimony is not sensitive to water and has better water stability.

As a comparison, Figure 3 shows the X-ray diffraction spectrum of the sodium composite oxide NaNi_{0.2}Fe_{0.29}Mn_{0.4}Cu_{0.11}O₂ without antimony before and after being immersed into deionized water for 24 hours. The solid line in Figure 3 shows the X-ray diffraction pattern of the O3 phase crystal of the sodium composite oxide that was not immersed in deionized water (before immersed), while the dashed line shows the X-ray diffraction pattern of the sodium composite oxide after being immersed in deionized water for 24 hours (after immersed). From Figure 3, it can be seen that I₁/I₀ is 0.08, and there is a deviation in the positions of each characteristic peak in the two X-ray diffraction patterns, indicating that the crystal structure of the sodium composite oxide without antimony undergoes significant changes after being immersed in deionized water for 24 hours. Therefore, the sodium composite oxide without antimony is more sensitive to water and has poor stability to water.

In those optional embodiments, doping with antimony enhances the interaction force between transition metals and oxygen in the O3 phase layered sodium composite oxide containing antimony, thereby increasing its stability to water. This is reflected by parameter I₁/I₀, i.e., the larger the ratio of I₁/I₀ is, the less sensitive to water will be, indicating that the sodium composite oxide containing antimony has better stability to water.

In some embodiments, the volume average particle size Dv50 of the positive electrode active material is from 3 µm to 30 µm.

Optionally, the volume average particle size Dv50 of the positive electrode active material is from 5 µm to 15 µm.

According to the present application, the volume average particle size Dv50 of the positive electrode active material can be measured using conventional methods in the art. For example, it can be testes according to standard GB/T 19077-2016 Particle size analysis-Laser diffraction methods, which can be conveniently measured using a laser particle size analyzer, such as the Mastersizer 2000E laser particle size analyzer from Marvin Instruments Limited, UK.

In those optional embodiments, the volume average particle size Dv50 of the positive electrode active material falls within the appropriate rangewhich is advantageous to achieving a positive electrode active material layer having a higher compaction density, and as well as having an appropriate porosity to meet the electrolyte infiltration required for electrochemical reactions. It also has a shorter migration path of active ions and electrons within the particles, thereby improving the energy density and cycling performance of the positive electrode active material layer.

In some embodiments, the specific surface area of the positive electrode active material is from 0.1m²/g to 5m²/g.

Optionally, the specific surface area of the positive electrode active material is from 0.3m²/g to 3m²/g.

According to the present application, the specific surface area of the positive electrode active material has a well-known meaning in the art and can be measured using well-known instruments and methods in the art. For example, it can be tested according to standard GB/T 19587-2017 Determination of the specific surface area of solids by gas adsorption using the BET method. The method of nitrogen adsorption specific surface area analysis test method can be used for testing, and the BET (Brunauer Emmett Teller) method can be used to calculate the specific surface area of nitrogen adsorption. The nitrogen adsorption specific surface area analysis test can be conducted using the Tri Star II 3020 specific surface and pore analyzer from Micromeritics, United States.

In those optional embodiments, the appropriate specific surface area of the positive electrode active material can reduce the liquid absorption phenomenon during the preparation process of the positive electrode slurry, improve the solid content and particle dispersion uniformity in the positive electrode slurry, thereby improving the particle dispersion uniformity and compaction density in the film layer containing the positive electrode active material, thereby increasing the specific capacity and energy density of the sodium ion battery, and improving the cycling performance of the sodium ion battery.

In some embodiments, the tap density of the positive electrode active material is from 1g/cm³ to 3g/cm³.

Optionally, the tap density of the positive electrode active material is from 1.5g/cm³ to 2.5g/cm³.

According to the present application, the tap density of the positive electrode active material has a well-known meaning in the art, and can be measured using well-known instruments and methods in the art. For example, it can be measured according to standard GB/T 5162-2006 Metallic powders-Determination of tap densityby using a tap density tester, such as the FZS4-4B type tap density tester.

In these optional embodiments, the positive electrode active material having an appropriate tap density is conducive to making the positive electrode active material have a higher compaction density, thereby enabling the sodium ion battery to have higher capacity performance and energy density.

In some embodiments, the powder compaction density of the positive electrode active material under a pressure of 8 tons is from 3g/cm³ to 5g/cm³, and optionally from 3.5 g/cm³ to 4.5 g/cm³.

According to the present application, the compaction density of the positive electrode active material is a well-known meaning in the art, and can be measured using well-known instruments and methods in the art, for example, it can be tested according to standard GB/T 24533-2009, on, for example, UTM7305 electronic pressure testing machine.

In those optional embodiments, the positive electrode active material has a high compaction density, which is beneficial for the sodium ion battery to have high capacity performance and energy density. Within this range, the higher the compaction density of the positive electrode active material, the higher the capacity performance and energy density of the sodium ion battery.

### Preparation method of positive electrode active materials

A method for preparing a positive electrode active material, comprising
providing a raw materialthat has elements at the proportion satisfying the chemical formula of Formula I according to any embodiment of the first aspect of the present application;
calcining the raw material, to obtain a positive electrode active material,
wherein the positive electrode active material comprises a layered sodium composite oxide containing antimonyhaving a chemical formula of Formula I,

   NaₓMnₐFe_{b}Ni_{c}Sb_{d}LₑO₂ (I),
in Formula I, 0.7 < x ≤ 1, 0 < a, 0 ≤ b, 0.1 < c ≤ 0.3, 0 < d < 0.1, 0 ≤ e, a+b+c+d+e=1, (b+c)/(a+d+e) ≤ 1, and L is one or more selected from Cu, Li, Ti, Zr, K, Nb, Mg, Ca, Mo, Zn, Cr, W, Bi, Sn, Ge, Al, Si, La, Ta, P, and B.

In some embodiments, the raw material of the positive active material can be prepared by coprecipitation method, gel method or solid phase method.

According to the embodiment of the preparation method for the positive electrode active material of the present application, the raw material are provided first, and then calcined to obtain the positive electrode active material. The preparation method of the above positive electrode active material is simple and has high manufacturability.

In some embodiments, step S1 comprises stirring a sodium source, manganese source, iron source, nickel source, antimony source, and L source homogeneously, to obtain the raw material. In S1, a ball mill mixer or a high-speed mixer can be used for mixing. As an example, sodium source, manganese source, iron source, nickel source, antimony source, and L source are added to a high-speed mixer according to the stoichiometric ratio for mixing, with a mixing time of from 0.5 hours to 2 hours. By solid-phase mixing method, sodium source, manganese source, iron source, nickel source, antimony source, and L source are mixed to obtain raw material.

In some embodiments of the present application, the L source is one or more selected from Cu, Li, Ti, Zr, K, Nb, Mg, Ca, Mo, Zn, Cr, W, Bi, Sn, Ge, Al, Si, La, Ta, P, and B sources.

In some embodiments of the present application, the sodium source is one or more selected from Na₂CO₃, NaHCO₃, NaOH, and Na₂O₂.

In some embodiments of the present application, the iron source is one or more selected from Fe₂O₃, Fe₃O₄, and FeO.

In some embodiments of the present application, the manganese source is one or more selected from Mn₂O₃, Mn₃O₄, MnO, and MnO₂.

In some embodiments of the present application, the nickel source is selected from NiO or Ni(OH)₂.

In some embodiments of the present application, the antimony source is one or more selected from elemental antimony, antimony-containing oxides, or antimony salts
In some other embodiments, step S1, providing raw material, comprises mixing iron source, manganese source, nickel source, L source with water to obtain a mixture solution; mixing the mixture with a precipitant to form a precipitate; stirring the precipitate, sodium source, and antimony source homogeneously to obtain the raw material. By co-precipitation method, manganese source, iron source, nickel source, and L source are precipitated, and then mixed with sodium source and antimony source through ball milling mixer or high-speed mixer to obtain raw material.

In some embodiments of the present application, the L source is one or more selected from Cu, Li, Ti, Zr, K, Nb, Mg, Ca, Mo, Zn, Cr, W, Bi, Sn, Ge, Al, Si, La, Ta, P, and B sources.

In some embodiments of the present application, the sodium source is one or more selected from Na₂CO₃, NaHCO₃, NaOH, and Na₂O₂.

In some embodiments of the present application, the iron source is one or more selected from iron-containing chlorides, iron-containing sulfates, and iron-containing nitrates.

In some embodiments of the present application, the manganese source is one or more selected from manganese-containing chlorides, manganese-containing sulfates, and manganese-containing nitrates.

In some embodiments of the present application, the nickel source is one or more selected from nickel-containing chlorides, nickel-containing sulfates, and nickel-containing nitrates.

In some embodiments of the present application, the antimony source is one or more selected from the elemental antimony, antimony-containing oxides, or antimony salts.

In some embodiments of the present application, the precipitant is one or more selected from hydroxides, carbonates, and oxalates.

In some embodiments, step S2 comprises calcining the raw material in a muffle furnace, with a calcination temperature of from 600°C to 1200°C, an atmosphere of air or oxygen, and a holding time of 10-20 hours. The calcination temperature has a significant impact on the performance of positive electrode active materials. When the calcination temperature is low, the reaction is incomplete and it is likely to generate amorphous materials, which contain impurities and have a significant impact on the electrochemical performance of positive electrode active materials. As the calcination temperature increases, the diffusion coefficient of the material increases, promoting the diffusion of ions and vacancies, particle rearrangement, and other material transfer processes, which is conducive to obtaining products with high structural stability. When the calcination temperature is high, it is likely to generate anoxic compounds, and it is not advantageous to the intercalation and deinterlaction of sodium ions in the positive electrode active material.

Optionally, the calcination temperature is from 900°C to 950°C, and the holding time is from 15 hours to 20 hours.

Optionally, pre-calcination can be carried out as needed before calcination. The pre-calcination temperature is from 600°C to 900°C, and the atmosphere is air or oxygen. The holding time is from 10 hours to 20 hours.

In some embodiments of the present application, the calcinating in step S2 further includes mechanical crushing treatment after cooling to obtain the positive electrode active material. In this way, the volume average particle size Dv50 of the positive electrode active material is from 3 µm to 30 µm. It is beneficial for the final positive electrode active material to have a better particle size distribution and specific surface area.

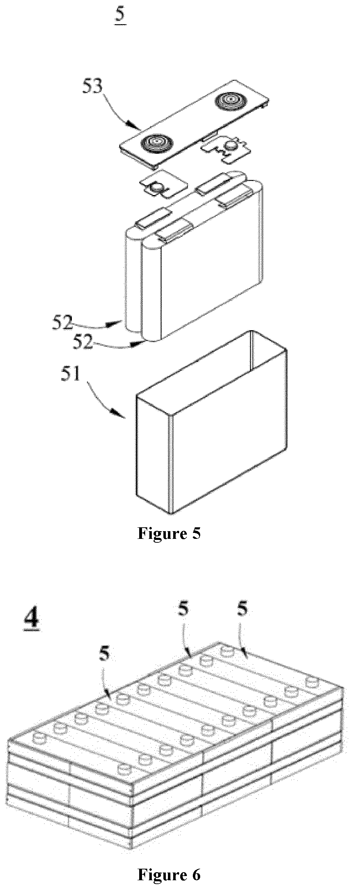

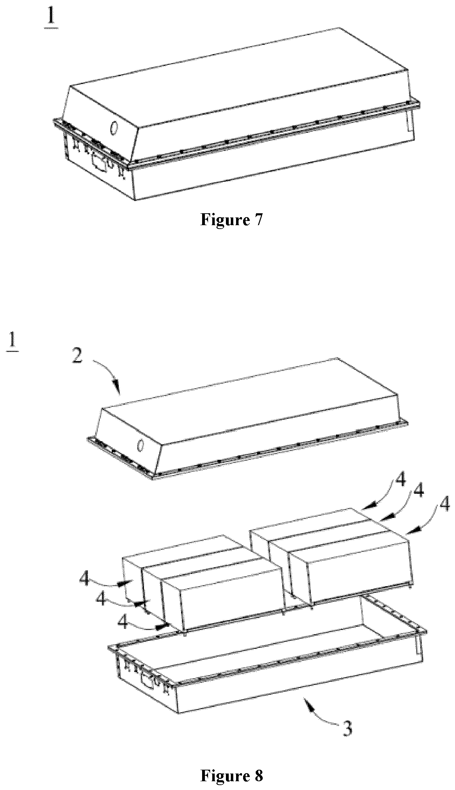

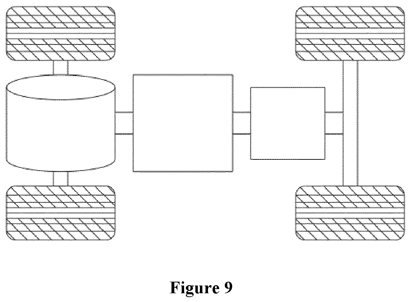

In addition, the secondary battery, battery module, battery pack, and electrical device of the present application will be explained with appropriate reference to Figures 4 to 9. Figure 4 is a schematic diagram of a secondary battery according to the first embodiment of the present application. Figure 5 is an exploded view of the secondary battery according to the first embodiment of the present application, as shown in Figure 4. Figure 6 is a schematic diagram of a battery module according to an embodiment of the present application. Figure 7 is a schematic diagram of a battery pack according to an embodiment of the present application. Figure 8 is an exploded view of the battery pack according to an embodiment of the present application, as shown in Figure 7. Figure 9 is a schematic diagram of electrical device using a secondary battery as a power source according to the first embodiment of the present application.

The third aspect of the present application provides a secondary battery, including a positive electrode active material of the first aspect of the present application or a positive electrode active material prepared through the preparation method of the second aspect of the present application.

Normally, secondary batteries include a positive electrode plate, a negative electrode plate, a electrolyte solution, and a separator. During the charging and discharging process of the battery, active ions are inserted and removed back and forth between the positive and negative electrode plates. The electrolyte plays a role in conducting ions between the positive and negative electrode plates. The separatorseparator is set between the positive and negative electrode plates, mainly to prevent short circuits between the positive and negative electrodes, and to allow ions to pass through.

The positive electrode plate includes a positive electrode current collector and a positive electrode film layer formed on at least a portion of the surface of the positive electrode current collector. The positive electrode film layer includes a positive electrode active material, which is the positive electrode active material of the first aspect of the present application or the positive electrode active material prepared using the preparation method of the second aspect of the present application. Therefore, the previous description of the embodiments of the positive electrode active material of the present application is also applicable to the positive electrode active material in secondary batteries, and the same contents will not be repeated.

In some embodiments, the positive electrode film layer may also include a conductive agent to improve the conductivity of the positive electrode. The present application does not particularly limit the types of conductive agents and can be selected based on actual needs. As an example, conductive agents can be one or more of superconducting carbon, acetylene black, carbon black, Koqin black, carbon dots, carbon nanotubes, graphite, graphene, and carbon nanofibers.

In some embodiments, the positive electrode film layer may also include an adhesive to firmly bond the positive electrode active material and optional conductive agent to the positive electrode current collector. The present application does not particularly limit the types of adhesives and can be selected based on actual needs. As an example, the adhesive can be at least one of polyvinylidene fluoride (PVDF), polytetrafluoroethylene (PTFE), polyacrylic acid (PAA), polyvinyl alcohol (PVA), ethylene vinyl acetate copolymer (EVA), styrene butadiene rubber (SBR), carboxymethyl cellulose (CMC), sodium alginate (SA), polymethyl acrylic acid (PMA), and carboxymethyl chitosan (CMCS).

In some embodiments, the positive electrode current collector can use conductive carbon sheets, metal foils, carbon coated metal foils, porous metal plates, or composite current collectors. The conductive carbon materials of the conductive carbon sheets can be one or more of superconducting carbon, acetylene black, carbon black, Koqin black, carbon dots, carbon nanotubes, graphite, graphene, and carbon nanofibers, while the metal foils The metal materials of carbon coated metal foil and porous metal plate can be independently selected from at least one of copper, aluminum, nickel, and stainless steel. Composite collector can be a composite collector formed by combining metal foil and polymer substrate film. The positive current collector is one or more of copper foil, aluminum foil, nickel foil, stainless steel foil, stainless steel mesh, and carbon coated aluminum foil, preferably aluminum foil.

The positive electrode plate is preoared according to conventional methods in the art. Usually, the positive electrode active material, optional conductive agents, and binders are dispersed in a solvent (such as -N-methylpyrrolidone, abbreviated as NMP) to form a uniform positive electrode slurry. The positive electrode slurry is applied on the positive electrode current collector, dried, and cold pressed to obtain the positive electrode plate.

In some embodiments of the present application, the negative electrode plate includes a negative current collector and a negative electrode film layer arranged on at least one surface of the negative current collector, and the negative electrode film layer includes a negative electrode active material.

As an example, the negative current collector has two surfaces opposite in its own thickness direction, and the negative film layer is set on either or both of the two surfaces opposite to the negative current collector.

In some embodiments, the negative current collector can use metal foil or a composite current collector. For example, as a metal foil, copper foil can be used. The composite current collector can include a polymer material substrate and a metal layer formed on at least one surface of the polymer material substrate. Composite current collectors can be formed by forming metal materials (copper, copper alloys, nickel, nickel alloys, titanium, titanium alloys, silver, and silver alloys, etc.) onto polymer substrates such as polypropylene (PP), polyethylene terephthalate (PET), polybutylene terephthalate (PBT), polystyrene (PS), polyethylene (PE), etc.

In some embodiments, the negative electrode active material may use a negative electrode active material commonly known in the art of batteries. As an example, negative electrode active materials can include at least one of the following materials: artificial graphite, natural graphite, soft carbon, hard carbon, silicon based materials, tin based materials, etc. The silicon based material can at least one be selected from elemental silicon, silicon oxides, silicon carbon composites, silicon nitrogen composites, and silicon alloys. The tin based material can be at least one selected from elemental tin, tin oxide compounds, and tin alloys. However, the present application is not limited to these materials, and other traditional materials that can be used as negative electrode active materials for batteries can also be used. These negative electrode active materials can be used alone or in combination with two or more.

In some embodiments, the negative electrode film layer may also optionally include an adhesive. The adhesive can be at least one selected from styrene butadiene rubber (SBR), polyacrylic acid (PAA), sodium polyacrylate (PAAS), polyacrylamide (PAM), polyvinyl alcohol (PVA), sodium alginate (SA), polymethylacrylic acid (PMAA), and carboxymethyl chitosan (CMCS).

In some embodiments, the negative electrode film layer may also optionally include a conductive agent. The conductive agent can be selected from at least one of superconducting carbon, acetylene black, carbon black, Koqin black, carbon dots, carbon nanotubes, graphene, and carbon nanofibers.

In some embodiments, the negative electrode film layer may optionally include other additives, such as thickeners such as carboxymethyl cellulose sodium (CMC-Na).

In some embodiments, negative electrode plates can be prepared by dispersing the components used for preparing negative electrode plates, such as negative electrode active materials, conductive agents, binders, and any other components, into a solvent (such as deionized water) to form a negative electrode slurry; After applying the negative electrode slurry on the negative electrode current collector, drying, cold pressing, and other processes, the negative electrode plate can be obtained.

In some embodiments of the present application, the electrolyte conducts ions between the positive and negative electrode plates. There are no specific restrictions on the types of electrolytes of the present application, and you can choose according to your needs. For example, the electrolyte can be liquid, gelled or all solid.

In some embodiments, the electrolyte uses an electrolyte. The electrolyte includes an electrolyte salt and a solvent.

In some embodiments, the electrolyte salt can be one or more selected from NaPF₆, NaClO₄, NaBF₄, KPF₆, KClO₄, KBF₄, LiPF₆, LiClO₄, LiBF₄, Zn(PF₆)₂, Zn(ClO₄)₂, Zn(BF₄)₂.

In some embodiments, the electrolyte salt may one or more be selected from NaPF₆, NaClO₄, or NaBF₄.

In some embodiments, the solvent can be at least one selected from ethyl carbonate, propyl carbonate, methyl ethyl carbonate, diethyl carbonate, dimethyl carbonate, dipropyl carbonate, methyl propyl carbonate, ethylpropyl carbonate, butyl carbonate, fluorocarbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone and diethyl sulfone.

In some embodiments, the electrolyte may also optionally include additives. For example, additives can include negative electrode film forming additives, positive electrode film forming additives, and can also include additives that can improve certain battery performance, such as additives that improve battery overcharging performance, additives that improve battery high or low temperature performance, etc.

In some embodiments of the present application, the types of separator are not particularly limited, any well-known porous structure separator with good chemical and mechanical stability can be selected.

In some embodiments, the material of the separator can be at least one selected from glass fiber, non-woven fabric, polyethylene, polypropylene, and polyvinylidene fluoride. The separator can be a single layer thin film or a multi-layer composite thin film without special limitations. When the separator is a multi-layer composite film, the materials of each layer can be the same or different without particular limitation.

In some embodiments, the positive electrode plate, negative electrode plate, and separator can be produced into an electrode assembly through winding or stacking processes.

In some embodiments, the secondary battery may include an outer package. The outer package may be used for encapsulating the positive electrode plate, the negative electrode plate, and the electrolyte. In some embodiments, the secondary battery may include an outer packaging. The outer packaging can be used to encapsulate the electrode assembly and electrolytes as mentioned above.

In some embodiments, the outer package of the secondary battery may be a hard case, such as a hard plastic case, an aluminum case, or a steel case. The outer package of the secondary battery may also be a soft bag, such as a pouch type soft bag. The material of the soft bag may be plastic, for example, including one or more of polypropylene, polybutylene terephthalate, and polybutylene succinate.

The present application does not have particular limitation to the shape of the secondary battery. The secondary battery may be cylindrical, square, or in other arbitrary shape. For example, Figure 4 shows a square structured secondary battery 5 as an example.

In some embodiments, referring to Figure 5, the outer package may include a shell 51 and a cover plate 53. The shell 51 may include a bottom plate and side plates connected to the bottom plate, wherein the bottom plate and the side plates are united to form a receiving cavity. The shell 51 has an opening communicated with the receiving cavity, and the cover plate 53 can cover the opening to close the receiving cavity. The positive electrode plate, the negative electrode plate and the separator may be wound or laminated to form an electrode assembly 52. The electrode assembly 52 is encapsulated in the receiving cavity. The electrolyte solution infiltrates the electrode assembly 52. The secondary battery 5 includes one or more electrode assemblies 52, which can be elected by those skilled in the art according to requirements.

In some embodiments, the secondary battery may be assembled to be a battery module, wherein the battery module may include one or more secondary batteries, and the specific number can be elected by those skilled in the art according to the application and capacity of the battery module.

Figure 6 shows a battery module 4 as an example. Referring to Figure 6, in battery module 4, a plurality of secondary batteries 5 may be arranged sequentially in a length direction of the battery module 4. Of course, they may also be arranged in any arbitrary way. Further, a plurality of secondary batteries 5 may be fixed by fasteners.

Optionally, the battery module 4 may further include a housing having a receiving space, with a plurality of secondary batteries 5 received in the receiving space.

In some embodiments, the above-mentioned battery module may also be assembled to be a battery pack, and the number of battery modules included in the battery pack may be one or more and can be elected by those skilled in the art according to the application and capacity of the battery pack.

Figures 7 and 8 show a battery pack as an example. Referring to Figures 7 and 8, the battery pack 1 may include a battery case and a plurality of battery modules 4 disposed in the battery case. The battery case includes an upper case body 2 and a lower case body 3. The upper case body 2 may cover the lower case body 3, to form a closed space for receiving the battery modules 4. A plurality of battery modules 4 may be arranged in the battery case in any manner.

The present application further provides an electrical device, comprising at least one of the secondary battery, the battery module, or the battery pack described in the present application. The secondary battery, the battery module, or the battery pack may be used as a power source for the electrical device, and may also be used as an energy storage unit for the electrical device. The electrical device may include a mobile device (e.g., a mobile phone, a notebook computer, etc.), an electric vehicle (e.g., a pure electric vehicle, a hybrid electric vehicle, a plug-in hybrid electric vehicle, an electric bicycle, an electric scooter, an electric golf vehicle, an electric truck, etc.), an electric train, a ship, a satellite, an energy storage system, etc., but is not limited thereto.

The secondary battery, the battery module, or the battery pack used in the electrical device may be selected according to requirements for using

Figure 9 shows an electrical device as an example. The electrical device is a pure electric vehicle, a hybrid electric vehicle, or a plug-in hybrid electric vehicle, etc. In order to meet the requirements of the electrical device for high power and high energy density of the secondary battery, a battery pack or a battery module may be used.

As another example, the device may be a mobile phone, a tablet computer, a notebook computer, etc. The device is generally required to be thin and light, and thus the secondary battery can be used as a power source.

### Examples

Hereinbelow, the examples of the present application are described. The examples described below are exemplary, are only intended explain but not limit the present application, accordingly, they should not be understood as limitations to the present application. If the specific technology or conditions are not specified in the examples, they may be conducted according to the literals well-known in the art or the product manual. The reagents or instruments as used, if are not provided with the manufacturer, they are conventional products and can be obtained through market procurement.

### Example 1

Weighed a total amount of 30g of Na₂CO₃, NiO, Mn₂O₃, CuO, and Sb₂O₃ according to the molar ratio of the fed main elements Na: Mn: Ni: Cu: Sb=1:0.2:0.5:0.2:0.1. Pre-grounding each sample in an agate mortar, then adding them to a planetary mill for ball milling for 1 hour, to obtain the raw material. Placing the raw material homogeneously in an open crucible, and then raising the temperature from room temperature to 950°C at a heating rate of 5°C /min in a muffle furnace. Maintaining the temperature at 950°C for 15 hours and naturally cooling down, to obtain the positive electrode active material. The positive electrode active material was a layered NaNi_{0.2}Mn_{0.5}Cu_{0.2}Sb_{0.1}O₂.

Preparing the positive electrode active materials of Examples 1-19 and Comparative Examples 1-6 according to Table 1 below.

**Table 1 Parameters of positive electrode active materials of Examples 1-19 and Comparative Examples 1-6**

| Nos. | Positive Electrode Active Materials | Sodium Source | Nickel Sourc e | Iron Source | Mangan ese Source | L Source | Antimo ny Source | Molar Ratio of the Fed Main Elements |
|---|---|---|---|---|---|---|---|---|
| Example 1 | NaNi_{0.2}Mn_{0.5}Cu_{0.2}Sb_{0.1}O₂ | Na₂CO₃ | NiO | -- | Mn₂O₃ | CuO | Sb₂O₃ | 1 : 0.2 : 0.5 : 0.2 : 0.1 |
| Example 2 | NaNi_{0.2}Fe_{0.2}Mn_{0.5}Sb_{0.1}O₂ | Na₂CO₃ | NiO | Fe₂O₃ | Mn₂O₃ | -- | Sb₂O₃ | 1 : 0.2 : 0.2 : 0.5 : 0.1 |
| Example 3 | NaNi_{0.2}Fe_{0.29}Mn_{0.4}Cu_{0.1}Sb_{0.01}O₂ | Na₂CO₃ | NiO | Fe₂O₃ | Mn₂O₃ | CuO | Sb₂O₃ | 1 : 0.2 : 0.29 : 0.4 : 0.1 : 0.01 |
| Example 4 | NaNi_{0.2}Fe_{0.25}Mn_{0.4}Cu_{0.1}Sb_{0.05}O₂ | Na₂CO₃ | NiO | Fe₂O₃ | Mn₂O₃ | CuO | Sb₂O₃ | 1 : 0.2 : 0.25 : 0.4 : 0.1 : 0.05 |
| Example 5 | NaNi_{0.2}Fe_{0.2}Mn_{0.4}Cu_{0.1}Sb_{0.1}O₂ | Na₂CO₃ | NiO | Fe₂O₃ | Mn₂O₃ | CuO | Sb₂O₃ | 1 : 0.2 : 0.2 : 0.4 : 0.1 : 0.1 |
| Example 6 | NaNi_{0.1}Fe_{0.2}Mn_{0.5}Cu_{0.1}Sb_{0.1}O₂ | Na₂CO₃ | NiO | Fe₂O₃ | Mn₂O₃ | CuO | Sb₂O₃ | 1 : 0.1 : 0.2 : 0.5 : 0.1 : 0.1 |
| Example 7 | NaNi_{0.15}Fe_{0.2}Mn_{0.45}Cu_{0.1}Sb_{0.1}O₂ | Na₂CO₃ | NiO | Fe₂O₃ | Mn₂O₃ | CuO | Sb₂O₃ | 1 : 0.15 : 0.2 : 0.45 : 0.1 : 0.1 |
| Example 8 | NaNi_{0.18}Fe_{0.2}Mn_{0.42}Cu_{0.1}Sb_{0.1}O₂ | Na₂CO₃ | NiO | Fe₂O₃ | Mn₂O₃ | CuO | Sb₂O₃ | 1 : 0.18 : 0.2 : 0.42 : 0.1 : 0.1 |
| Example 9 | NaNi_{0.2}Fe_{0.25}Mn_{0.3}Cu_{0.15}Sb_{0.1}O₂ | Na₂CO₃ | NiO | Fe₂O₃ | Mn₂O₃ | CuO | Sb₂O₃ | 1 : 0.2 : 0.25 : 0.3 : 0.15 : 0.1 |
| Example 10 | NaNi_{0.2}Fe_{0.25}Mn_{0.25}Cu_{0.2}Sb_{0.1}O₂ | Na₂CO₃ | NiO | Fe₂O₃ | Mn₂O₃ | CuO | Sb₂O₃ | 1 : 0.2 : 0.25 : 0.25 : 0.2 : 0.1 |
| Example 11 | NaNi_{0.2}Fe_{0.25}Mn_{0.22}Cu_{0.23}Sb_{0.1}O₂ | Na₂CO₃ | NiO | Fe₂O₃ | Mn₂O₃ | CuO | Sb₂O₃ | 1 : 0.2 : 0.25 : 0.22 : 0.23 : 0.1 |
| Example 12 | NaNi_{0.2}Fe_{0.29}Mn_{0.4}Cu_{0.01}Sb_{0.1}O₂ | Na₂CO₃ | NiO | Fe₂O₃ | Mn₂O₃ | CuO | Sb₂O₃ | 1 : 0.2 : 0.29 : 0.4 : 0.01 : 0.1 |
| Example 13 | NaNi_{0.2}Fe_{0.25}Mn_{0.4}Cu_{0.05}Sb_{0.1}O₂ | Na₂CO₃ | NiO | Fe₂O₃ | Mn₂O₃ | CuO | Sb₂O₃ | 1 : 0.2 : 0.25 : 0.4 : 0.05 : 0.1 |
| Example 14 | NaNi_{0.2}Fe_{0.22}Mn_{0.4}Cu_{0.08}Sb_{0.1}O₂ | Na₂CO₃ | NiO | Fe₂O₃ | Mn₂O₃ | CuO | Sb₂O₃ | 1 : 0.2 : 0.22 : 0.4 : 0.08 : 0.1 |
| Example 15 | NaNi_{0.2}Fe_{0.2}Mn_{0.4}Mg_{0.1}Sb_{0.1}O₂ | NaHCOs | NiO | Fe₃O₄ | Mn₂O₃ | MgO | Sb₂O₃ | 1 : 0.2 : 0.2 : 0.4 : 0.1 : 0.1 |
| Example 16 | NaNi_{0.2}Fe_{0.24}Mn_{0.4}B_{0.15}Sb_{0.01}O₂ | NaHCOs | Ni(O H)₂ | Fe₃O₄ | MnO₂ | B₂O₃ | Sb₂O₃ | 1 : 0.2 : 0.24 : 0.4 : 0.15 : 0.01 |
| Example 17 | NaNi_{0.2}Fe_{0.2}Mn_{0.4}Li_{0.1}Sb_{0.1}O₂ | NaOH | NiO | Fe₂O₃ | MnO₂ | Li₂O | Sb₂O₃ | 1 : 0.2 : 0.2 : 0.4 : 0.1 : 0.1 |
| Example 18 | NaNi_{0.2}Fe_{0.2}Mn_{0.4}Mg_{0.1}Sb_{0.1}O₂ | NaOH | NiO | Fe₂O₃ | MnO₂ | MgO | Sb₂O₃ | 1 : 0.2 : 0.2 : 0.4 : 0.1 : 0.1 |
| Example 19 | NaNi_{0.2}Fe_{0.2}Mn_{0.4}Al_{0.1}Sb_{0.1}O₂ | NaHCOs | NiO | FeO | FeO | Al₂O₃ | Sb | 1 : 0.2 : 0.2 : 0.4 : 0.1 : 0.1 |
| Comparative Example1 | NaNi_{0.2}Fe_{0.29}Mn_{0.4}Cu_{0.11}O₂ | Na₂CO₃ | NiO | Fe₂O₃ | Mn₂O₃ | CuO | -- | 1 : 0.2 : 0.29 : 0.4 : 0.11 |
| Comparative Example2 | NaFe_{0.3}Mn_{0.2}Cu_{0.1}Sb_{0.1}O₂ | Na₂CO₃ | -- | Fe₂O₃ | Mn₂O₃ | CuO | Sb₂O₃ | 1 : 0.3 : 0.2 : 0.1 : 0.1 |
| Comparative Example 3 | NaNi_{0.3}Fe_{0.3}Mn_{0.2}Cu_{0.1}Sb_{0.1}O₂ | Na₂CO₃ | NiO | Fe₂O₃ | Mn₂O₃ | CuO | Sb₂O₃ | 1 : 0.3 : 0.3 : 0.2 : 0.1 : 0.1 |
| Comparative Example 4 | NaNi_{0.05}Fe_{0.05}Mn_{0.6}Cu_{0.2}Sb_{0.1}O₂ | Na₂CO₃ | NiO | Fe₂O₃ | Mn₂O₃ | CuO | Sb₂O₃ | 1 : 0.05 : 0.05 : 0.6 : 0.2 : 0.1 |
| Comparative Example 5 | NaNi_{0.2}Fe_{0.29}Mn_{0.4}Cu_{0.15}Sb_{0.005}O₂ | Na₂CO₃ | NiO | Fe₂O₃ | Mn₂O₃ | CuO | Sb₂O₃ | 1 : 0.2 : 0.29 : 0.4 : 0.15 : 0.005 |
| Comparative Example 6 | NaNi_{0.2}Fe_{0.1}Mn_{0.4}Cu_{0.1}Sb_{0.3}O₂ | Na₂CO₃ | NiO | Fe₂O₃ | Mn₂O₃ | CuO | Sb₂O₃ | 1 : 0.2 : 0.1 : 0.4 : 0.1 : 0.3 |

### Manufacturing of Sodium Ion Batteries

### (1) Preparation of positive electrode plate

Mixing the above positive electrode active material with conductive carbon black (SP) and adhesive polyvinylidene fluoride (PVDF) in an appropriate amount of N-methylpyrrolidone (NMP) solvent at a weight ratio of 80: 15:5, to form a uniform positive electrode slurry; applying the slurry to the positive current collector of Al foil coated with carbon, drying, cold pressing, and then punching into a small circular disc with a diameter of 14 mm.

### (2) Preparation of electrolyte solution

Dissolving an equal volume of ethylene carbonate in propylene carbonate, and then homogeneously dissolving an appropriate amount of sodium perchlorate in a mixed solvent, to form a 1mol/L electrolyte solution for later use.
(3) Using metal sodium sheet as the negative electrode plate.
(4) Porous polyethylene film is used as the separator.
(5) Stacking and winding the positive electrode plate, separator, and negative electrode plate in sequence to obtain the electrode assembly. Placing the electrode assembly in the outer packaging, adding the electrolyte solution as prepared above, and after packaging, standing, formation, aging, and other processes, to obtain a secondary battery.

The positive electrode active materials and secondary batteries are tested according to the following testing method.

### (1) Test of interlayer spacing d₀₀₃ and space group of 003 crystal planes of the positive electrode active materials

Grinding the sample to be tested in a drying room or glove box in an agate mortar and sieving through a 350 mesh sieve. Taking an appropriate amount of the sieved sample and placing it in the middle of the sample holder groove, so that the loose sample powder is slightly higher than the sample holder plane; taking a glass slide and gently pressing the surface of the sample to make it level with the frame plane, and scraping off the excess powder. After the sample preparation was completed, using the Bruce D8A_A25 type X-ray powder diffractometer from Bruce AxS, German, to conduct the test with CuK α Ray as the radiation source, ray wavelength λ= 1.5406 Å, scan 2θ angle range being from 10° to 70°, and the scanning rate is 4 °/min. After the testing is completed, the interlayer spacing d₀₀₃ of the 003 crystal plane is obtained from the angle corresponding to the 003 crystal plane, according to the Bragg equation 2d • sin θ=λ, and from the fact that each cell of the 003 crystal plane contains three transition metal layer. By comparing the XRD diffraction peaks of the sample with the standard card of the XRD analysis software, the space group of the sample could be confirmed.

### (2) Immersion testing of positive electrode active materials

Taking 5g of the positive electrode active material and placing it into a beaker. Adding 15mL of deionized water and vigorously stirring for 1 minute. Letting it stand for 24 hours, then filterring and vacuum drying at 60°C for 6 hours, to obtain the soaked positive electrode active material.

The X-ray powder diffractometer used in the above test (1) was used to observe the intensity changes of the characteristic peak (003) in the X-ray diffraction spectrum of the positive electrode active material before and after being immersed into water for 24 hours. I₁ represents the characteristic peak intensity of (003) in the X-ray diffraction spectrum of the positive electrode active material after being immersed into water for 24 hours, and I₀ represents the characteristic peak intensity of (003) in the X-ray diffraction spectrum of the positive electrode active material before being immersed. I₁/I₀ can represent the water stable type of the positive electrode active material. The smaller I₁/I₀ is, the poorer the water stability of the positive electrode active material and the more sensitive to water will be.

### (3) Capacity change rate testing under high humidity storage

The positive electrode active materials prepared in the above embodiments were kept in an air environment with a humidity of 70% and a temperature of 25°C for one day, or kept under conventional storage conditions (humidity < 1% and temperature of 25°C) for one day. Batteries were made fromthe positive electrode active materials that had been kept under two storage conditions respectively, and were testedfor capacity thereof, to calculate the high humidity storage capacity change rate of the positive electrode active materials.

Specifically, at 25°C, the positive electrode active materials were prepared into a secondary battery, which was charged to 4.3V at a constant current density of 10mA/g, and then discharged to 1.5V at a constant current density of 10mA/g, to obtain the specific discharge capacity C0 of the secondary battery. After the same positive electrode active material stays in air at a humidity of 70% and a temperature of 25 °C for one day, the obtained positive electrode active material was prepared into a button type battery at 25 °C. The battery was charged to 4.3V at a constant current density of 10mA/g, and then discharged to 1.5V at a constant current density of 10mA/g. The specific discharge capacity C1 of the secondary battery was obtained, wherein the rate of change was C1/C0.

**Table 2 Test Results of Examples 1-19 and Comparative Examples 1-6**

| Nos. | Interlayer spacing (nm) | I₁/I₀ | Volume average particle size Dv50 (µm) | Specific surface area (m²/g) | Tap density (g/cm³) | Powder compaction density (g/cm³) | Capacity change rate under high humidity storage |
|---|---|---|---|---|---|---|---|
| Example 1 | 0.536 | 0.82 | 8 | 0.8 | 1.8 | 4.0 | 98% |
| Example 2 | 0.535 | 0.77 | 7 | 0.7 | 1.7 | 4.1 | 98% |
| Example 3 | 0.532 | 0.35 | 10 | 0.8 | 1.8 | 4.0 | 95% |
| Example 4 | 0.536 | 0.66 | 9 | 0.7 | 1.8 | 4.0 | 98% |
| Example 5 | 0.535 | 0.86 | 8 | 0.8 | 1.8 | 4.0 | 98% |
| Example 6 | 0.536 | 0.85 | 9 | 0.8 | 1.7 | 4.1 | 99% |
| Example 7 | 0.534 | 0.76 | 9 | 0.7 | 1.9 | 4.0 | 98% |
| Example 8 | 0.535 | 0.68 | 8 | 0.7 | 1.8 | 4.0 | 98% |
| Example 9 | 0.532 | 0.40 | 9 | 0.7 | 1.9 | 4.1 | 97% |
| Example 10 | 0.533 | 0.38 | 11 | 0.7 | 1.7 | 4.0 | 97% |
| Example 11 | 0.535 | 0.33 | 10 | 0.8 | 1.6 | 4.1 | 98% |
| Example 12 | 0.534 | 0.32 | 9 | 0.6 | 1.9 | 4.0 | 96% |
| Example 13 | 0.532 | 0.31 | 9 | 0.7 | 1.8 | 4.1 | 97% |
| Example 14 | 0.533 | 0.41 | 11 | 0.8 | 1.8 | 4.0 | 96% |
| Example 15 | 0.536 | 0.46 | 10 | 0.6 | 1.9 | 4.1 | 96% |
| Example 16 | 0.534 | 0.76 | 12 | 0.7 | 1.8 | 4.0 | 95% |
| Example 17 | 0.536 | 0.85 | 11 | 0.8 | 2.0 | 4.0 | 99% |
| Example 18 | 0.534 | 0.41 | 11 | 0.7 | 1.9 | 4.0 | 96% |
| Example 19 | 0.538 | 0.64 | 11 | 0.6 | 1.8 | 4.1 | 97% |
| Comparative Example 1 | 0.533 | 0.08 | 8 | 0.8 | 1.9 | 4.0 | 81% |
| Comparative Example 2 | 0.536 | 0.07 | 7 | 0.8 | 2.0 | 4.1 | 82% |
| Comparative Example 3 | 0.533 | 0.06 | 7 | 0.7 | 1.9 | 4.0 | 84% |
| Comparative Example 4 | 0.545 | 0.76 | 8 | 0.6 | 1.8 | 4.0 | 80% |
| Comparative Example 5 | 0.533 | 0.17 | 8 | 0.8 | 1.7 | 4.0 | 89% |
| Comparative Example 6 | 0.536 | 0.88 | 6 | 0.8 | 1.8 | 4.0 | 88% |

According to the above results, it could be seen that Examples 1 to 19 have achieved good results, with moderate interlayer spacing, large I₁/I₀ values, and high specific surface area, tap density, and powder compaction density under a pressure of 8 tons of the positive electrode active material. Moreover, the capacity change rate under high humidity storage was high, and the higher the change rate was, the better the water stability would be. According to the present application, by being doped specific metal Sb, the layered sodium composite oxide containing antimony had high stability to water can be obtained, and the side reaction of the sodium composite oxide containing antimony during the electrochemical reaction process was effectively inhibited, result in a higher specific surface area, tap density, and powder compaction density under a pressure of 8 tons. Furthermore, the specific capacity of the first charge and discharge of the sodium ion battery containing the positive electrode active material of the present application was higher.

In Comparative Example 1, the I₁/_{I0} value of the positive electrode active material without antimony doping was small, indicating poor water stability of the positive electrode active material. For Comparative Examples 2, 3, and 4, if the content of doped Fe and Ni was too high, excessive Fe and Ni are more likely to react with water, resulting in a lower I₁/I₀ value of the positive electrode active material, indicating poor water stability of the positive electrode active material. The positive electrode active material contains a lower content of Fe and Ni, which enabled sodium ion batteries using such positive electrode active materials to have a lower initial charging and discharging specific capacity and also reduces the structural stability between layered antimony containing sodium composite oxide layers. As shown in Comparative Examples 5 and 6, avoiding excessive Sb doping leaded to a reduced initial charging and discharging specific capacity of sodium ion batteries, while Sb doping was too low to meet the stability of the positive electrode material towards water.

Although the present application has been described with reference to preferred embodiments, various improvements can be made and components can be replaced with equivalents without departing from the scope of the present application. Especially, provided that there is no structural conflict, the various technical features mentioned in each embodiment can be combined in any way. The present application is not limited to the specific embodiments disclosed herein, but includes all technical solutions falling within the scope of the claims.

## Claims

1. A positive electrode active material, comprising a layered sodium composite oxide containing antimony having a chemical formula of Formula I,
NaₓMnₐFe_{b}Ni_{c}Sb_{d}LₑO₂ (I),
in which 0.7 < x ≤ 1, 0 < a, 0 ≤ b, 0.1 < c ≤ 0.3, 0 < d ≤ 0.1, 0 ≤ e, a+b+c+d+e=1, (b+c)/(a+d+e) ≤ 1, and L is one or more selected from Cu, Li, Ti, Zr, K, Nb, Mg, Ca, Mo, Zn, Cr, W, Bi, Sn, Ge, Al, Si, La, Ta, P, and B.

2. The positive electrode active material according to claim 1, wherein,
in Formula I, 0.3 ≤ a ≤ 0.4, 0.2 ≤ b ≤ 0.3, 0.15 ≤ c ≤ 0.2, 0.05 ≤ d ≤ 0.1, 0.05 ≤ e ≤ 0.1, a+b+c+d+e=1, and 0.4 ≤ (b+c)/(a+d+e) ≤ 1.

3. The positive electrode active material according to claim 1 or 2, wherein
L is one or more selected from Cu, Li, Ti, Zr, Mg, Ca, Zn, Bi, Sn, Al, Si, La, Ta, P, and B, and optionally, L is one or more selected from Cu, Li, Mg, Zn, Al, Si, and B.

4. The positive electrode active material according to any one of claims 1 to 3, wherein
the sodium composite oxide containing antimony includes an O3 phase which has a layered crystal structure with a space group R3m.

5. The positive electrode active material according to any one of claims 1 to 4, wherein
the sodium composite oxide containing antimony has an interlayer spacing of from 0.53 nm to 0.54 nm.

6. The positive electrode active material according to any one of claims 1 to 5, wherein
the sodium composite oxide containing antimony has a X-ray diffraction spectrum that satisfies I₁/I₀ >_ 0.2,
wherein I₁ is the peak intensity of the X-ray diffraction peak on the 003 crystal surface of the O3 phase of the sodium composite oxide containing antimony after being immersed in deionized water for 24 hours, and I₀ is the peak intensity of the X-ray diffraction peak on the 003 crystal surface of the O3 phase of the sodium composite oxide containing antimony before being immersed in deionized water.

7. The positive electrode active material according to any one of claims 1 to 6, wherein,
the positive electrode active material satisfies one or more of the following conditions (1) to (4):
(1) the volume average particle size Dv50 of the positive electrode active material is from 3 µm to 30 µm, and optionally from 5 µm to15 µm;
(2) the specific surface area of the positive electrode active material is from 0.1 m²/g to 5 m²/g, and optionally from 0.3 m²/g to 3 m²/g;
(3) the tap density of the positive electrode active material is from 1 g/cm³ to 3 g/cm³, and optionally from 1.5 g/cm³ to 2.5 g/cm³; and
(4) the powder compaction density of the positive electrode active material under a pressure of 8 tons is from 3 g/cm³ to 5 g/cm³, and optionally from 3.5 g/cm³ to 4.5 g/cm³.

8. A method for preparing a positive electrode active material, comprising
providing a raw materialthat has elements and the portions thereof satisfying the chemical formula of Formula I according to any one of claims 1 to 7;
calcining the raw material, to obtain a positive electrode active material,
wherein, the positive electrode active material comprises a layered sodium composite oxide containing antimony, wherein the sodium composite oxide containing antimony has a chemical formula of Formula I,
NaₓMnₐFe_{b}Ni_{c}Sb_{d}LₑO₂ (I),
in which 0.7 < x ≤ 1, 0 < a, 0 ≤ b, 0.1 < c ≤ 0.3, 0 < d < 0.1, 0 ≤ e, a+b+c+d+e=1, (b+c)/(a+d+e) ≤ 1, and L is one or more selected from Cu, Li, Ti, Zr, K, Nb, Mg, Ca, Mo, Zn, Cr, W, Bi, Sn, Ge, Al, Si, La, Ta, P, and B.

9. The method for preparing a positive electrode active material according to claim 8, wherein,
the providing a raw material comprises
stirring a sodium source, manganese source, iron source, nickel source, antimony source, and L source homogeneously, to obtain the raw material,
wherein the L source is selected one or more sources selected from Cu source, Li source, Ti source, Zr source, K source, Nb source, Mg source, Ca source, Mo source, Zn source, Cr source, W source, Bi source, Sn source, Ge source, Al source, Si source, La source, Ta source, P source, and B source.

10. The method for preparing a positive electrode active material according to claim 8 or 9, wherein, the raw material satisfies one or more of the following conditions (5) to (9):
(5) the sodium source is one or more selected from Na₂CO₃, NaHCO₃, NaOH, and Na₂O₂;
(6) the iron source is one or more selected from Fe₂O₃, Fe₃O₄, and FeO;
(7) the manganese source is one or more selected from Mn₂O₃, Mn₃O₄, MnO, and MnO₂;
(8) the nickel source is selected from NiO or Ni(OH)₂;
(9) the antimony source is one or more selected from elemental antimony, antimony-containing oxides, or antimony salts.

11. The method for preparing a positive electrode active material according to any one of claims 8 to 10, wherein providing a raw material comprises
mixing iron source, manganese source, nickel source, and L source with water, to obtain a mixture solution, wherein the L source is one or more selected from Cu source, Li source, Ti source, Zr source, K source, Nb source, Mg source, Ca source, Mo source, Zn source, Cr source, W source, Bi source, Sn source, Ge source, Al source, Si source, La source, Ta source, P source, and B source;
mixing the mixture solution with a precipitant, to form a precipitate;
stirring the precipitate, sodium source, and antimony source homogeneously, to obtain the raw material.

12. The method for preparing a positive electrode active material according to claim 11, wherein the raw material satisfies one or more of the following conditions (10) to (15):
(10) the sodium source is one or more selected from Na₂CO₃, NaHCO₃, NaOH, and Na₂O₂;
(11) the iron source is one or more selected from iron-containing chlorides, iron-containing sulfates, and iron-containing nitrates;
(12) the manganese source is one or more selected from manganese-containing chlorides, manganese-containing sulfates, and manganese-containing nitrates;
(13) the nickel source is one or more selected from nickel-containing chlorides, nickel-containing sulfates, and nickel-containing nitrates;
(14) the antimony source is one or more selected from elemental antimony, antimony-containing oxides, or antimony salts;
(15) the precipitant is one or more selected from hydroxides, carbonates, and oxalates.

13. A secondary battery, **characterized in** comprising the positive electrode active material according to any one of claims 1 to 7 or the positive electrode active material prepared by the method for preparing the positive electrode active material according to any one of claims 8 to12.

14. A battery module, including the secondary battery according to claim 13.

15. A battery pack, including the battery module according to claim 14.

16. A electrical device, including at least one selected from the secondary battery according to claim 13, the battery module according to claim 14, or the battery pack according to claim 15.
